# EUROPEAN PATENT APPLICATION

(11) **EP 3 270 618 A1**
(43) Date of publication of application: **17.01.2018**
(21) Application number: 17180710.0
(22) Date of filing: 11.07.2017
(51) Int. Cl.: H04W 12/06, H04L 29/06

(54) **AUTHENTICATION DEVICE, AUTHENTICATION SYSTEM, AUTHENTICATION METHOD, AND PROGRAM**

(30) Priority: 13.07.2016 JP 2016138639; 21.09.2016 JP 2016183767
(71) Applicant: Konica Minolta, Inc., Tokyo 100-7015 (JP)
(72) Inventor: Morita, Akemi, Tokyo, 100-7015 (JP); Ueda, Takashi, Tokyo, 100-7015 (JP); Iizuka, Shinichi, Tokyo, 100-7015 (JP)
(74) Representative: Hoffmann Eitle

(57) **Abstract**

An authentication device (300) includes a biometric information obtaining unit (301) which obtains biometric information of a subject, a communication unit (35) which communicates with another authentication device (200), an authentication unit (302) which performs a first authentication process with the biometric information, and a control unit. The communication unit transmits the biometric information to the other authentication device to cause the other authentication device to perform a second authentication process. When the subject is authenticated by the second authentication process of the other authentication device as being valid and thereafter while a predetermined condition is satisfied, the control unit transmits information to an apparatus to be controlled (100) for causing the apparatus to authenticate the subject when the subject is authenticated by the first authentication process as being valid.

## Description

### BACKGROUND OF THE INVENTION

### Field of the Invention

The present invention relates to an authentication device, an authentication system, an authentication method, and a program, and more particularly to an authentication device, an authentication system, an authentication method, and a program, that employ a subject's biometric information to authenticate the subject.

### Description of the Related Art

As awareness of security increases, authentication using biometric information or authentication using a combination of biometric information and an ID (identification) or a password, rather than conventional authentication using only an ID and a password, is drawing attention. An authentication system using biometric information is disclosed in WO 2002/009034 and WO 2009/096475.

In authentication using biometric information measured by a sensor, in general, valid biometric information is registered in a device (a PC (personal computer) or a server), and the device performs a matching computation using the obtained biometric information and the valid biometric information. This is because the device is equipped with a high-performance computation device (a CPU (central processing unit) and memory) and can perform a complicated computation (high precision computation) for a biometric authentication process at high speed.

This allows the sensor to have an inexpensive and simple hardware configuration and the sensor can be miniaturized and less costly.

Furthermore, in recent years, there is a demand to also perform biometric authentication to enhance security when using a large scale on-premises system or cloud service. Registering personal data regarding biometric authentication in a cloud server, however, has a risk of leakage of many users' privacy information.

In view of this, Japanese Laid-Open Patent Publication No. 2002-123778 discloses a method in which a mobile phone obtains biometric information which is in turn matched against biometric information previously stored in the mobile phone. Furthermore, Japanese National Patent Publication No. 2004-518229 discloses a configuration in which a portable personal digital identification device matches biometric information measured by the device against biometric information previously stored in the device and performs authentication.

Furthermore, in order to avoid the above risk, FIDO (Fast IDentity Online) in which an online authentication protocol referred to as UAF (Universal Authentication Framework) is implemented is proposed. In the FIDO, a biometric authentication sensor has biometric information and in that sensor a matching computation is performed.

Furthermore, a wearable fingerprint authentication platform has been proposed by DDS, Inc. In this proposed system, a device performs authentication based on a user's fingerprint, and when the device successfully authenticates the user, an ID is stored thereto for obtaining a permission to use an apparatus.

### SUMMARY OF THE INVENTION

In Japanese Laid-Open Patent Publication No. 2002-123778, in order to obtain a permission to use an apparatus, a device such as a PC comprising an authentication sensor performs biometric authentication of a user. In that case, whenever the user uses the apparatus, the user needs to take the device out of a bag or the like, which is cumbersome.

The authentication device disclosed in Japanese National Patent Publication No. 2004-518229 is of a type which an individual wears, and the issue of usability described above can be solved. The authentication device disclosed in Japanese National Patent Publication No. 2004-518229 is of a relatively small type, and accordingly may limit an implementable operation processing unit (a CPU) in performance. In that case, when a high precision authentication process is frequently performed, the operation processing unit consumes an increased amount of power. When a low-performance operation processing unit is implemented to suppress power consumption, the authentication process requires an increased period of time.

The present disclosure has been provided in view of such problems, and an object thereof is to provide an authentication device, an authentication system, an authentication method, and a program that are easy to use. Another object thereof is to provide an authentication device, an authentication system, an authentication method, and a program requiring a short period of time for an authentication process. Still another object thereof is to provide an authentication device, an authentication system, an authentication method, and a program, that can suppress power consumption.

A portable authentication device according to one aspect of the present disclosure comprises: a biometric information obtaining unit which obtains biometric information of a subject; a communication unit which communicates with another authentication device; an authentication unit which performs a first authentication process with the biometric information obtained by the biometric information obtaining unit; and a control unit.

The communication unit transmits the obtained biometric information to the other authentication device to cause the other authentication device to perform a second authentication process with the obtained biometric information. When the subject is authenticated by the second authentication process of the other authentication device as being valid and thereafter while a predetermined condition is satisfied, the control unit transmits to an apparatus to be controlled information for causing the apparatus to authenticate the subject when the subject is authenticated by the first authentication process as being valid.

A portable authentication device according to another aspect of the present disclosure comprises: a communication unit which communicates with another authentication device comprising a biometric information obtaining unit which obtains biometric information of a subject, the other authentication device performing a first authentication process with the biometric information obtained; an authentication unit which performs a second authentication process with the biometric information received from the other authentication device; and a control unit.

When the subject is authenticated by the second authentication process as being valid and thereafter while a predetermined condition is satisfied, the control unit transmits information to an apparatus to be controlled for causing the apparatus to authenticate the subject when the subject is authenticated by the first authentication process as being valid.

Preferably, the first authentication process is different in precision from the second authentication process.

Preferably, the second authentication process is higher in precision than the first authentication process.

Preferably, the predetermined condition includes at least one of: a condition based on a strength of a signal received by the authentication device from the other authentication device; a condition based on a period of time having elapsed since the subject was authenticated by the second authentication process as being valid; and a condition based on a position of the authentication device.

Preferably, the authentication device further comprises a storage unit that stores information for causing the apparatus to authenticate the subject, wherein the authentication device is further configured to prohibit reading the information from the storage unit when the subject is authenticated by the second authentication process as being valid and a predetermined condition is unsatisfied.

According to another aspect of the present disclosure, a system comprising the above authentication device and the above other authentication device is provided.

According to still another aspect of the present disclosure, an authentication method using a portable authentication device, comprises: obtaining a subject's biometric information; communicating with another authentication device; performing a first authentication process with the biometric information obtained, the communicating including transmitting the obtained biometric information to the other authentication device to cause the other authentication device to perform a second authentication process with the obtained biometric information; and when the subject is authenticated by the second authentication process of the other authentication device as being valid and thereafter while a predetermined condition is satisfied, transmitting to an apparatus to be controlled information for causing the apparatus to authenticate the subject when the subject is authenticated by the first authentication process as being valid.

According to another aspect of the present disclosure, an authentication method using a portable authentication device comprises: communicating with another authentication device comprising a biometric information obtaining unit which obtains biometric information of a subject, the other authentication device performing a first authentication process with the biometric information obtained; performing a second authentication process with the biometric information received from the other authentication device; and when the subject is authenticated by the second authentication process as being valid and thereafter while a predetermined condition is satisfied, transmitting to an apparatus to be controlled information for causing the apparatus to authenticate the subject when the subject is authenticated by the first authentication process as being valid.

According to another aspect of the present disclosure, a program for causing a processor to perform the above authentication method is provided.

A portable authentication device according to still another aspect of the present disclosure comprises: a biometric information obtaining unit which obtains biometric information of a subject; a communication unit which wirelessly communicates with a terminal device which can be carried by the subject; and a control unit. The control unit is configured to perform an authentication process based on the obtained biometric information and make the authentication process different in precision based on a strength of a signal received from the terminal device.

Preferably, the control unit of the authentication device performs an authentication process having a first precision when the strength of the signal received from the terminal device is equal to or greater than a threshold value and the control unit of the authentication device performs an authentication process having a second precision higher than the first precision when the strength is less than the threshold value.

Preferably, the control unit is further configured to make the authentication process different in precision based on a period of time having elapsed since the authentication process of the second precision was recently performed, and the strength of the signal received from the terminal device.

Preferably, the control unit is further configured to make the authentication process different in precision based on a position of the authentication device and the strength of the signal received from the terminal device.

Preferably, the communication unit further performs wireless communication with a target apparatus that can be to be operated by the subject, and the control unit is configured to cause the communication unit to transmit authentication information to the target apparatus for authenticating the subject when the subject is authenticated by the authentication process as being valid.

Preferably, the control unit is further configured to make the authentication process different in precision based on a type of the target apparatus and the strength of the signal received from the terminal device.

Preferably, the control unit is further configured to make the authentication process different in precision based on a type of a function of the target apparatus and the strength of the signal received from the terminal device.

Preferably, a communication system between the authentication device and the terminal device is different from a communication system between the authentication device and the target apparatus.

In still another aspect of the present disclosure, a system comprising the authentication device and the terminal device is provided.

An authentication method according to still another aspect of the present disclosure comprises: obtaining a subject's biometric information; wirelessly communicating with a terminal device which can be carried by the subject; and performing an authentication process using the biometric information. In the step of performing, an authentication process different in precision based on a strength of a signal received from the terminal device is performed.

In still another aspect of the present disclosure, a program for causing a processor to perform the above authentication method is provided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows a configuration of an authentication system 1 according to a first embodiment.
Fig. 2 shows a specific example of a hardware configuration of a biometric authentication sensor 300.
Fig. 3 shows a specific example of a hardware configuration of a mobile terminal 200.
Fig. 4 shows a specific example of a hardware configuration of an apparatus 100.
Fig. 5 shows an example of a configuration of a function of biometric authentication sensor 300.
Fig. 6 shows an example of a configuration of a function of mobile terminal 200.
Fig. 7 is a flowchart of an authentication process according to the first embodiment.
Fig. 8 is a flowchart of an authentication process according to the first embodiment.
Fig. 9 is a flowchart of an authentication process according to the first embodiment.
Fig. 10 schematically shows data transmitted and received between devices according to the first embodiment.
Fig. 11 shows an example of a configuration of a function of a biometric authentication sensor 300A according to a second embodiment.
Fig. 12 is a flowchart of an authentication process according to the second embodiment.
Fig. 13 is a flowchart of an authentication process according to the second embodiment.
Fig. 14 is a flowchart of an authentication process according to the second embodiment.
Fig. 15 schematically shows an authentication process or data flow in a system according to the second embodiment.
Fig. 16 is a flowchart of a process according to the second embodiment.
Fig. 17 is a flowchart of step S3a of FIG. 16.
Fig. 18 shows an example of contents of a table TB0 according to the second embodiment.
Fig. 19 schematically shows a manner of embodying an authentication process according to the second embodiment.
Fig. 20 schematically shows a manner of embodying an authentication process according to the second embodiment.
Fig. 21 schematically shows a manner of embodying an authentication process according to the second embodiment.
Fig. 22 shows an example of contents of tables TB1 and TB2 according to the second embodiment.

### DESCRIPTION OF THE PREFERRED EMBODIMENTS

Hereafter, reference will be made to the drawings to describe embodiments. In the following description, identical parts and components are identically denoted. Their names and functions are also identical.

### [First Embodiment]

A first embodiment is outlined as follows:

An authentication system includes a portable first device that obtains biometric information of a subject and a portable second device that communicates with the first device. The first device performs a first authentication process with the obtained biometric information and the second device performs a second authentication process having a precision different from that of the first authentication process. When the second device has established communication with the first device, the second device performs the second authentication process with biometric information received from the first device. Once the above communication has established, and the subject is authenticated by the second authentication process, and thereafter while a predetermined condition is satisfied, the first device transmits to an apparatus to be controlled information for causing the apparatus to authenticate the subject when the subject is authenticated by the first authentication process.

The first and second devices are portable, and thus easy to use. Furthermore, the authentication process can be distributed to and thus performed in the first device and second device. Furthermore, after the subject is authenticated by the second authentication process while the predetermined condition is satisfied, performing only the first authentication process suffices (that is, performing the second authentication process can be omitted).

Accordingly, in the first embodiment, in transmitting to the apparatus to be controlled the information for causing the apparatus to authenticate the subject, a burden of an authentication process is distributed to the first device and the second device and a processing load on each device can be reduced, and as a result, a period of time required for the authentication process can be reduced.

While in each embodiment a fingerprint image is indicated as biometric information, the biometric information is not limited to the fingerprint image. For example, it may be an image of a vein pattern, an image of an iris pattern, or the like.

Furthermore, in each embodiment, "information of a fingerprint image" includes the fingerprint image and/or a feature value of the fingerprint image.

### <System Configuration>

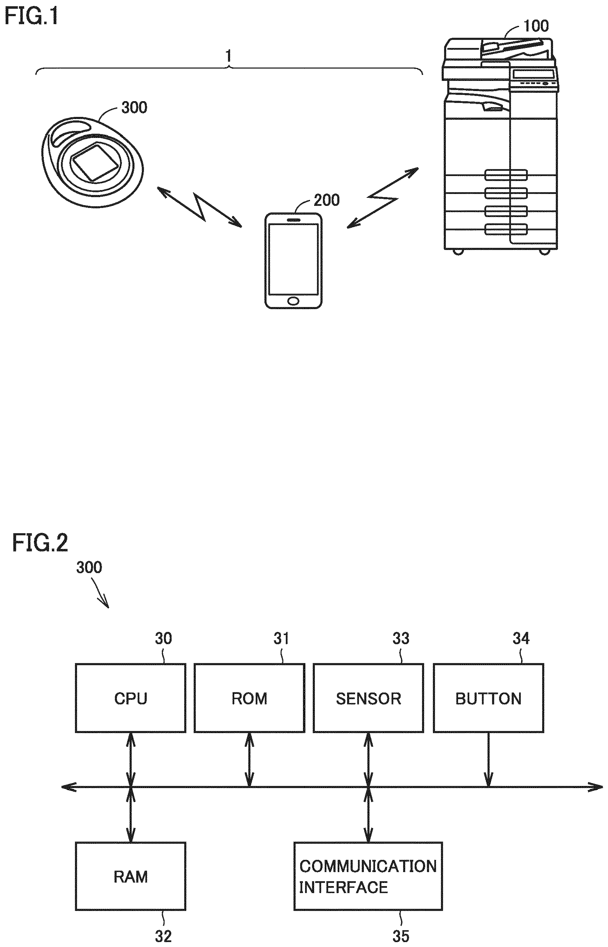

Fig. 1 shows a configuration of an authentication system 1 according to the first embodiment. Referring to FIG. 1, authentication system 1 includes a biometric authentication sensor 300 (corresponding to a first device) which obtains biometric information and a mobile terminal 200 (corresponding to a second device) which communicates with biometric authentication sensor 300. Biometric authentication sensor 300 and mobile terminal 200 are both examples of an authentication device having an authentication function using biometric information.

In authentication system 1, mobile terminal 200 and biometric authentication sensor 300 can be carried by a single user (or subject). Biometric authentication sensor 300 and mobile terminal 200 perform an authentication process using biometric information to authenticate the user. Based on a result of the authentication process, the user can be permitted to use or operate an apparatus 100 (corresponding to an apparatus to be controlled), including a login operation. While in the first embodiment, apparatus 100 is an image processing apparatus (for example, a copier, a printer, an MFP (Multi-Function Peripherals) or the like), apparatus 100 is not limited in type to the image processing apparatus. For example, it may be a system which manages permission/prohibition of entry.

Biometric authentication sensor 300 is a wearable miniaturized terminal such as a pendant, a wristwatch, a bag accessory or the like. Biometric authentication sensor 300 communicates with mobile terminal 200 by short-range wireless communication. While this short-range wireless communication follows, for example, the BLE (Bluetooth Low Energy) system which enables communication with extremely low power, the communication system is not limited to BLE. Furthermore, mobile terminal 200 or biometric authentication sensor 300 wirelessly communicates with apparatus 100. This wireless communication includes short-range wireless communication of a NFC (Near Field Radio Communication) system, for example, but is not limited thereto.

### <Configuration of biometric authentication sensor 300>

Fig. 2 shows a specific example of a hardware configuration of biometric authentication sensor 300. Referring to FIG. 2, biometric authentication sensor 300 includes a CPU (Central Processing Unit) 30 corresponding to a control unit for generally controlling the sensor, a ROM (Read Only Memory) 31 and a RAM (Random Access Memory) 32 for storing a program executed by CPU 30 and data, a sensor 33 for detecting biometric information, a button 34 operated to receive from a user an instruction directed to biometric authentication sensor 300, and a communication interface 35 performing wireless communication via an antenna (not shown).

Communication interface 35 includes a modem circuit, an amplification circuit, etc. for wireless communications according to BLE or NFC.

Sensor 33 has a plurality of electrodes. Sensor 33 includes a circuit which measures electrostatic capacity varying with a distance between a surface of a finger placed on a surface of the sensor and the electrodes, and a conversion circuit which converts the electrostatic capacity to data (or a fingerprint image). The method for obtaining a fingerprint image is not limited to the method based on the variation of the electrostatic capacity, and it may be a method of obtaining a fingerprint image via an image pickup device such as a CCD (Charge Coupled Device), for example.

### <Configuration of mobile terminal 200>

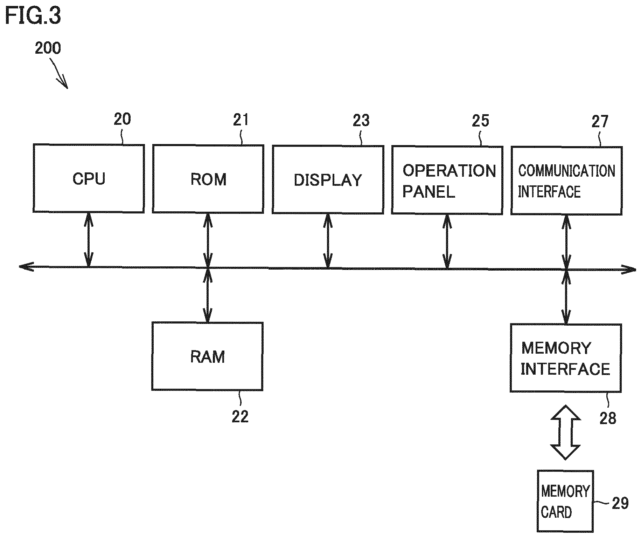

Fig. 3 shows a specific example of a hardware configuration of mobile terminal 200. With reference to Fig. 3, mobile terminal 200 includes a CPU 20 corresponding to a control unit generally controlling the mobile terminal, a ROM 21 and a RAM 22 for storing a program executed by CPU 20 and data, a display 23, an operation panel 25 operated by a user to input information to mobile terminal 200, a communication interface 27, and a memory interface 28.

Display 23 and operation panel 25 may be integrally configured as a touch panel. Communication interface 27 includes a modem circuit, an amplification circuit, etc. for performing wireless communications according to BLE or NFC between biometric authentication sensor 300 and apparatus 100.

Memory interface 28 allows a memory card 29 to be detachably attached thereto. Memory interface 28 includes a circuit controlled by CPU 20 to write/read data to/from memory card 29.

### <Configuration of apparatus 100>

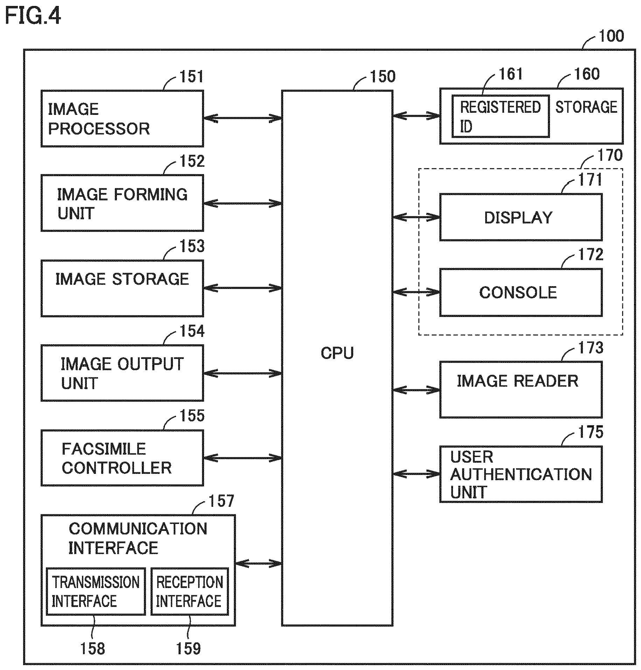

Fig. 4 shows a specific example of a hardware configuration of apparatus 100. In FIG. 4, for example, a configuration of an MFP is shown as apparatus 100. With reference to Fig. 4, apparatus 100 includes a CPU (Central Processing Unit) 150 for generally controlling the apparatus, a storage 160 for storing a program and data, an image storage 153 for mainly storing image data, an information input/output unit 170, a communication interface 157 for communicating with an external device including mobile terminal 200 or biometric authentication sensor 300, a user authentication unit 174, and a variety of processing units.

Storage unit 160 stores a program executed by CPU 10 and a variety of data. The data stored in storage 160 includes registered ID 161. Registered ID 161 indicates information registered to identify a user (or operator) of apparatus 100 as a valid user. Input/output unit 170 includes a display unit 171 including a display, and a console 172 operated by a user to input information to apparatus 100. Display unit 171 and console 172 may be integrally configured as a touch panel.

User authentication unit 174 performs an authentication process for a user of apparatus 100. Communication interface 157 includes a transmission interface 158 comprising a modulation circuit including an encoding circuit for transmitting data to an external device according to NFC or BLE, and a reception interface 159 comprising a demodulation circuit including a decoding circuit for receiving data from an external device according to NFC or BLE.

The variety of processing units include an image processor unit 151, an image forming unit 152, an image output unit 154, a facsimile controller 155 for controlling a facsimile function, and an image reader 173 for optically reading an original placed on a platen (not shown) to obtain image data. These various processing units read and write image data of image storage 153. Note that a function of each unit included in the variety of processing units is well known, and accordingly, it will not be described redundantly in detail.

### <Configuration of function of biometric authentication sensor 300>

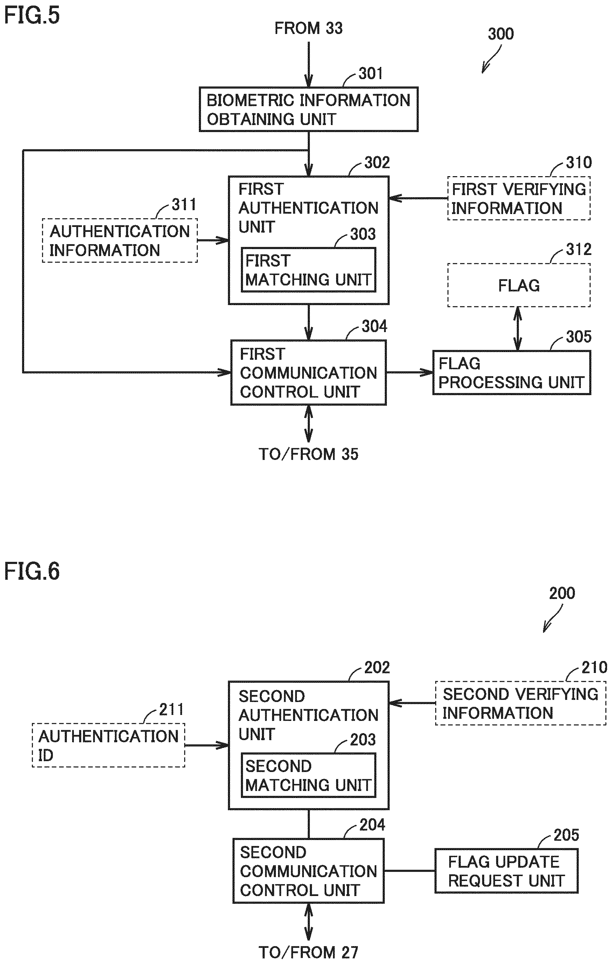

Fig. 5 shows an example of a configuration of a function of biometric authentication sensor 300. In biometric authentication sensor 300 of FIG. 5, first verifying information 310, authentication information 311, and a flag 312 are stored in a storage (ROM 31 or RAM 32). Biometric authentication sensor 300 includes a biometric information obtaining unit 301 which obtains a user's fingerprint image (biometric information) from an output of sensor 33, a first authentication unit 302 which performs a first authentication process with information of the obtained fingerprint image, a first communication control unit 304 for controlling communications done via communication interface 35, and a flag processing unit 305 to process flag 312.

First authentication unit 302 includes a first matching unit 303 to match the information of the fingerprint image obtained via sensor 33 against first verifying information 310 previously stored in ROM 31. First verifying information 310 includes information of a fingerprint image of a valid user of biometric authentication sensor 300. From a result of the matching process done by first matching unit 303, first authentication unit 302 calculates a similarity of the obtained fingerprint image and the fingerprint image of first verifying information 310. When first authentication unit 302 determines that the calculated similarity is equal to or greater than a threshold value, first authentication unit 302 reads authentication information 311 from ROM 31 and transmits the read authentication information 311 to apparatus 100 via first communication control unit 304. In contrast, when first authentication unit 302 determines that the similarity is less than the threshold value, first authentication unit 302 skips a process for reading authentication information 311 from ROM 31. Accordingly, in that case, authentication information 311 is not transmitted to apparatus 100.

First communication control unit 304 performs pairing with mobile terminal 200 via communication interface 35 and establishes a connection. First communication control unit 304 thereafter continues the pairing to maintain the connection. Furthermore, first communication control unit 304 receives from mobile terminal 200 an authentication result provided by a second authentication unit 202, which will be described later, and a flag update request from a flag update request unit 205, which will be described later. Furthermore, first communication control unit 304 transmits information of a fingerprint image obtained by biometric information obtaining unit 301 or authentication information 311 to mobile terminal 200.

In response to the flag update request received by first communication control unit 304, flag processing unit 305 sets on or off flag 312 stored in RAM 32.

A function of each unit of Fig. 5 corresponds to a program stored in ROM 31 of biometric authentication sensor 300, or a combination of a program and a circuit. When CPU 30 reads these programs from ROM 31 and executes a read program, a function of each unit is implemented. This circuit includes ASIC (Application Specific Integrated Circuit) or FPGA (Field-Programmable Gate Array) or the like.

### <Configuration of function of mobile terminal 200>

Fig. 6 shows an example of a configuration of a function of mobile terminal 200. Referring to FIG. 6, in mobile terminal 200, second verifying information 210 and an authentication ID 211 are stored in a storage (ROM 21 or RAM 22). Second verifying information 210 includes a fingerprint image of a valid user of mobile terminal 200. Authentication ID 211 indicates information for identifying a user of mobile terminal 200 as a valid user of apparatus 100. Mobile terminal 200 includes a second authentication unit 202, a second communication control unit 204 which controls communication interface 27, and a flag update request unit 205 which requests updating flag 312.

Second communication control unit 204 performs pairing with biometric authentication sensor 300 via communication interface 27 and establishes a connection. Second communication control unit 204 thereafter continues the pairing to maintain the connection. Furthermore, second communication control unit 204 receives information of a fingerprint image from biometric authentication sensor 300. Furthermore, second communication control unit 204 transmits authentication ID 211 to biometric authentication sensor 300. Second communication control unit 204 transmits a request from flag update request unit 205 to biometric authentication sensor 300.

Second matching unit 203 of second authentication unit 202 matches the information of the fingerprint image received from biometric authentication sensor 300 via second communication control unit 204 against second verifying information 210. Based on a result of the matching process done by second matching unit 203, second authentication unit 202 calculates a similarity of the fingerprint image received from biometric authentication sensor 300 and the fingerprint image of first verifying information 310. When second authentication unit 202 determines that the similarity is equal to or greater than a threshold value, second authentication unit 202 transmits authentication ID 211 to biometric authentication sensor 300 via second communication control unit 204. In contrast, when second authentication unit 202 determines that the similarity is less than the threshold value, second authentication unit 202 skips a process for transmitting authentication ID 211. Accordingly, in that case, authentication ID 211 is not transmitted to biometric authentication sensor 300.

A function of each unit of Fig. 6 corresponds to a program stored in ROM 21 of mobile terminal 200, or a combination of a program and a circuit. When CPU 20 reads these programs from ROM 21 and executes a read program, a function of each unit is implemented. This circuit includes ASIC (Application Specific Integrated Circuit) or FPGA (Field-Programmable Gate Array) or the like.

### <Matching process>

In the present embodiment, a process is performed for matching fingerprint images against each other to authenticate a user. This matching process for example includes a pattern matching method in which fingerprint images are compared (or matched), a feature point extraction method (a minutiae method) allowing a matching process to be done with higher precision than the pattern matching method, and a frequency analysis method allowing a matching process to be done with higher precision than the feature point extraction method.

The feature point extraction method is a method of extracting feature values from fingerprint images and comparing the extracted feature values with each other. A feature value includes attributes of end or branch points of a fingerprint, their relative positional relationship, etc. In the feature point extraction method, a process of extracting a feature (or feature value) from a fingerprint image is required as a pre-process of the matching process. In the frequency analysis method, a cross section obtained when a fingerprint indicated by an image is sliced is regarded as a signal waveform, which is subjected to a frequency analysis and a result thereof is extracted as a feature, and such extracted features are matched against each other. The frequency analysis method is combined with the minutiae method and thus applied to hybrid authentication. Note that the matching method is not limited to these methods.

In the first embodiment, biometric authentication sensor 300 performs an authentication process different in precision from that performed by mobile terminal 200. Specifically, second authentication unit 202 of mobile terminal 200 performs an authentication process higher in precision than first authentication unit 302 of biometric authentication sensor 300 does. Thus, in the first embodiment, first matching unit 303 of first authentication unit 302 performs a first matching process in accordance with the pattern matching method and second matching unit 203 of second authentication unit 202 performs a second matching process in accordance with the feature point extraction method so as to perform a combination of authentication processes with different precisions.

It should be noted that as long as a combination of authentication processes with different precisions is performed, a combination may be used in which the first matching process is a process in accordance with the feature point extraction method and the second matching process is a process in accordance with the frequency analysis method. Alternatively, the first matching process may be a process in accordance with the pattern matching method, and the second matching process may be a process in accordance with the frequency analysis method.

### <Flowchart of process>

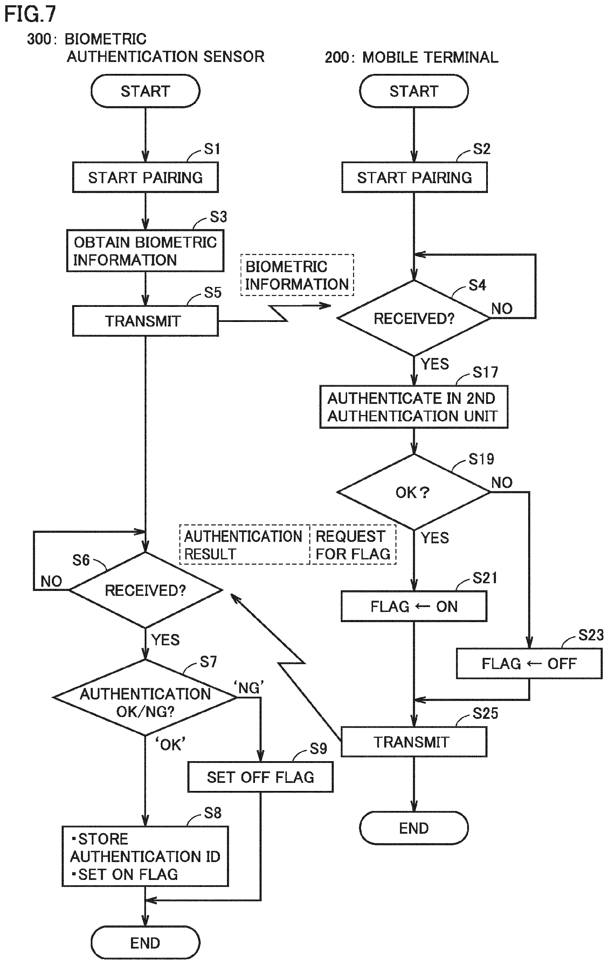

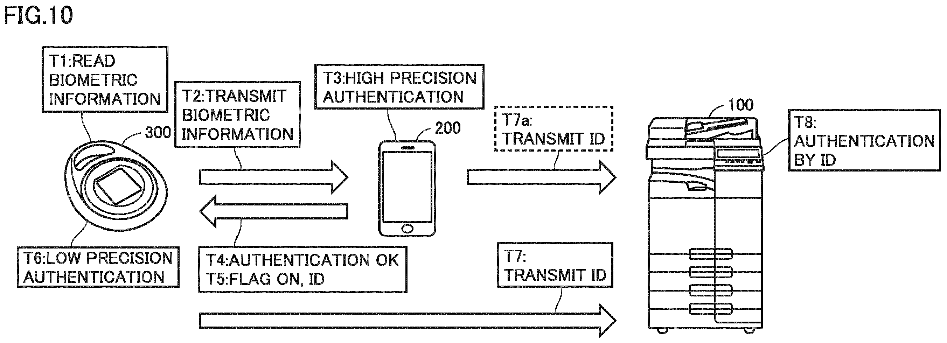

Figs. 7-9 are a flowchart of an authentication process according to the first embodiment. Fig. 10 schematically shows data transmitted and received between devices according to the first embodiment. With reference to Figs. 7-10, the authentication process according to the first embodiment will be described.

### (High precision authentication process by mobile terminal 200)

With reference to FIG. 7, a case will be described in which mobile terminal 200 performs a high precision authentication process and notifies biometric authentication sensor 300 of a result of the authentication process. Initially, first communication control unit 304 of biometric authentication sensor 300 and second communication control unit 204 of mobile terminal 200 start pairing, and establish communication (or connection) (Steps S1, S2). Once the communication has been established, the pairing is continuously performed to maintain the connection. The pairing is started when a predetermined operation is performed via button 34 of biometric authentication sensor 300 or when a predetermined operation is performed via operation panel 25 of mobile terminal 200.

Note that when the pairing is started, authentication information 311 of biometric authentication sensor 300 is an initial value (null or undefined).

Sensor 33 of biometric authentication sensor 300 detects (or measures) biometric information (or fingerprint image) of a user. Biometric information obtaining unit 301 obtains information of the fingerprint image from an output of sensor 33 by removing noise or the like therefrom (step S3 and step T1 of Fig. 10). First communication control unit 304 transmits the biometric information (the information of the fingerprint image) obtained by biometric information obtaining unit 301 to mobile terminal 200 (step S5 and step T2 of Fig. 10).

In mobile terminal 200, second communication control unit 204 determines whether biometric information (information of a fingerprint image) is received from biometric authentication sensor 300 (step S4). When second communication control unit 204 determines that biometric information is not received (NO in step S4), second communication control unit 204 waits until biometric information is received, and when second communication control unit 204 determines that biometric information is received (YES in step S4), second communication control unit 204 performs an authentication process with higher precision using the received biometric information (step S17 and step T3 in FIG. 10). Specifically, second matching unit 203 matches the information of the received fingerprint image against second verifying information 210 in accordance with the feature point extraction method.

Based on a similarity between the fingerprint images indicated by a result of the matching process, second authentication unit 202 determines whether the information of the fingerprint image received from biometric authentication sensor 300 indicates a fingerprint image of the user of mobile terminal 200 (Step S19).

Specifically, when second authentication unit 202 determines that the similarity is equal to or greater than a threshold value, in other words, when second authentication unit 202 determines that the information of the fingerprint image received from biometric authentication sensor 300 indicates a fingerprint image of the user of mobile terminal 200 (YES in Step S19), flag update request unit 205 transmits a request to biometric authentication sensor 300 via second communication control unit 204 for setting on flag 312 (steps S21 and S25, and step T 5 in FIG. 10). Furthermore, at the time, second authentication unit 202 transmits authentication ID 211 together with notification indicating "authentication = OK" to biometric authentication sensor 300 via second communication control unit 204 (step S25 and steps T4 and T5 of Fig. 10).

In contrast, when second authentication unit 202 determines that the similarity is less than the threshold value, in other words, when second authentication unit 202 determines that the information of the fingerprint image received from biometric authentication sensor 300 does not indicate a fingerprint image of the user of mobile terminal 200 (NO in Step S19), flag update request unit 205 transmits together with notification indicating "authentication = NG" a request to biometric authentication sensor 300 via second communication control unit 204 for setting off flag 312 (steps S23 and S25). It should be noted that when paring is started, and flag 312 is set off as an initialized state, step S23 may be omitted.

In biometric authentication sensor 300, first communication control unit 304 determines whether an authentication result of second authentication unit 202 is received from mobile terminal 200 (step S6).

While it is determined that no authentication result is received (NO in step S6), step S6 is repeated. When it is determined that the authentication result is received (YES in step S6), CPU 31 stores the received information to the storage (steps S7 to S9). More specifically, when CPU 31 determines that the received information indicates "authentication = OK" ("OK" in step S7), CPU 31 stores the received authentication ID 211 to the storage as authentication information 311. Further, flag processing unit 305 sets on flag 312 according to the received request (step S8).

In contrast, when CPU 31 determines that the received information indicates "authentication = NG" ('NG' in step S7), flag processing unit 305 sets off flag 312 according to the received request (step S9). At the time, CPU 31 skips the process for storing authentication ID 211. Therefore, authentication information 311 remains as an initial value (i.e., null or undefined).

As has been described above, in authentication system 1, high precision authentication process is performed by second authentication unit 202 of mobile terminal 200, whereby whether a user of biometric authentication sensor 300 matches a user of mobile terminal 200 is determined with high precision. When it is determined that they match, that is, when the user's validity is authenticated, biometric authentication sensor 300 can receive authentication ID 211 from mobile terminal 200 for permitting the user to use (or operate) apparatus 100.

### (Low precision authentication process by biometric authentication sensor 300)

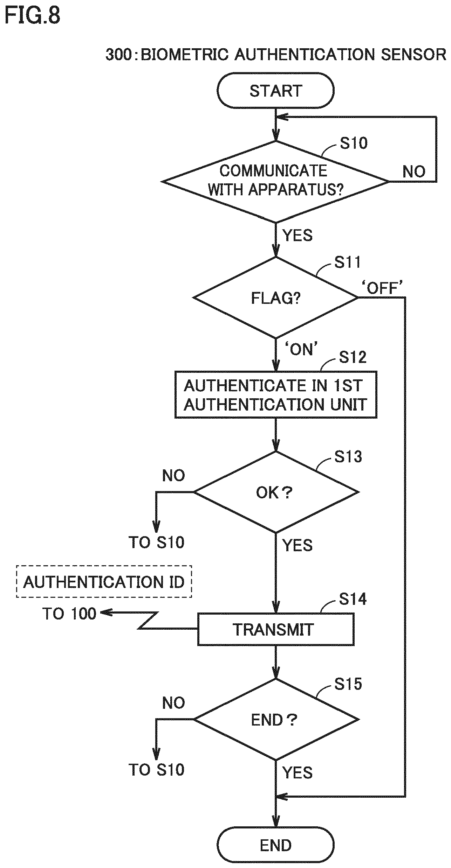

With reference to FIG. 8, a case will be described in which during the above pairing (i.e., while the connection is maintained), biometric authentication sensor 300 communicates with apparatus 100.

Initially, CPU 31 of biometric authentication sensor 300 determines whether to start communication with apparatus 100 to be operated, based on content of an operation done by a user via button 34 (step S10). While it is not determined that the operation content indicates starting communication with apparatus 100 (NO in step S10), step S10 is repeated.

In contrast, when CPU 31 determines that the operation content indicates starting communication with apparatus 100 (YES in step S10), CPU 31 determines what value flag 312 has (step S11). When CPU 31 determines that flag 312 is set off ("OFF" in step S11), a process for transmitting authentication information 311 (i.e., authentication ID 211) to apparatus 100 (step S14), as will be described later, is skipped, and a series of steps thus ends.

In contrast, when CPU 31 determines that flag 312 is set on ("ON" in step S11), CPU 31 starts first authentication unit 302. First authentication unit 302 performs an authentication process with lower precision using the biometric information (or information of a fingerprint image) obtained by biometric information obtaining unit 301 (step S12, and step T6 in FIG. 10). Specifically, first matching unit 303 matches a fingerprint image obtained via sensor 33 against the fingerprint image of first verifying information 310 according to pattern matching.

First authentication unit 302 determines whether the received fingerprint image matches the fingerprint image of first verifying information 310 (step S13). Specifically, first authentication unit 302 determines whether a similarity between the fingerprint images indicated by a result of the matching process performed by first matching unit 303 is equal to or greater than a threshold value. When first authentication unit 302 determines that the similarity is equal to or greater than the threshold value, that is, when the user's validity is authenticated (YES in step S13), CPU 31 reads authentication information 311 (i.e., authentication ID 211) from the storage and transmits the read authentication information 311 (i.e., authentication ID 211) to apparatus 100 via first communication control unit 304 (step S14, and Step T7 of FIG. 10). Subsequently, CPU 31 determines whether to end the process (step S15). When CPU 31 determines that the process is not ended (NO in step S15) the process returns to step S10, and a subsequent process is performed similarly as has been described.

In contrast, when first authentication unit 302 determines that the similarity is less than the threshold value, that is, when the user's validity is not authenticated (NO in step S13), CPU 31 skips the process for transmitting authentication information 311 (i.e., authentication ID 211) to apparatus 100 (step S14). Thereafter, CPU 31 determines whether to end a series of steps, based on content of an operation done by the user via button 34 (step S15). When CPU 31 determines that the series of steps is to be ended (YES in step S15), CPU 31 ends the series of steps, whereas when CPU 31 determines that the series of steps is not to be ended (NO in step S 15), the process returns to step S10 and a subsequent process is performed similarly as described above.

Thus, while flag 312 is set on after a user of biometric authentication sensor 300 and that of mobile terminal 200 are authenticated as being identical through the high precision authentication process done by second authentication unit 202, (i.e., the user's validity is authenticated), biometric authentication sensor 300 transmits authentication information 311 (i.e., authentication ID 211) to apparatus 100 for causing it to authenticate the user when the user of biometric authentication sensor 300 is authenticated as being valid through the low precision authentication process done by first authentication unit 302.

### (Authenticating user by apparatus 100)

Apparatus 100 receives authentication information 311 (authentication ID 211) from biometric authentication sensor 300 via reception interface 159. User authentication unit 174 matches the received authentication information 311 against registered ID 161 in storage 160 (step T8 of FIG. 10). When the matching's result indicates a match, CPU 150 starts each unit of apparatus 100. Thus, when it is determined that the user is a valid user (a user registered with apparatus 100), CPU 150 permits the user to use (or operate) apparatus 100.

On the other hand, when the result of the matching by user authentication unit 174 does not indicate a match, CPU 150 does not start each unit. Thus, when it is determined that the user is not a valid user of apparatus 100, CPU 150 prohibits the user from using (or operating) apparatus 100.

### (Updating flag 312)

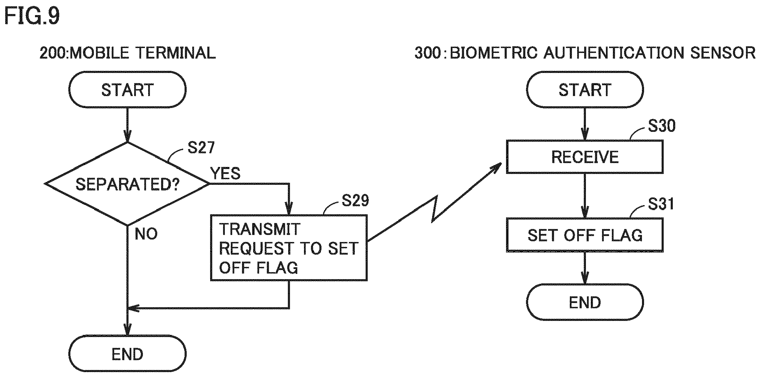

With reference to FIG. 9, a process for updating flag 312 during connection (or pairing) will be described. The process of Fig. 9 is repeatedly performed during pairing. In the first embodiment, when it is detected that biometric authentication sensor 300 is separated from mobile terminal 200 by a predetermined distance during pairing, flag processing unit 305 sets off flag 312. As a result, a process for reading authentication information 311 (authentication ID 211) in biometric authentication sensor 300 is skipped ('OFF' in step S11).

Based on a strength of a signal received from biometric authentication sensor 300, flag update request unit 205 determines whether biometric authentication sensor 300 is separated from mobile terminal 200 by the predetermined distance (step S27). Specifically, flag update request unit 205 detects a strength of a signal received from biometric authentication sensor 300 via second communication control unit 204. When flag update request unit 205 detects that the determination that the detected received signal's strength is less than a threshold value is continued a predetermined number of times, it is determined that biometric authentication sensor 300 is separated from mobile terminal 200 by the predetermined distance.

For example, while biometric authentication sensor 300 is left on a desk, a user carrying mobile terminal 200 with him/her moves, and when a distance between biometric authentication sensor 300 and mobile terminal 200 exceeds the predetermined distance, then, flag 312 is set off. Accordingly, the process for reading authentication information 311 (authentication ID 211) in biometric authentication sensor 300 is not performed.

When flag update request unit 205 determines that biometric authentication sensor 300 is separated from mobile terminal 200 (YES in step S27), flag update request unit 205 transmits a request to biometric authentication sensor 300 for setting off flag 312 (step S29). Thereafter the process ends.

In contrast, when flag update request unit 205 determines that biometric authentication sensor 300 is not separated from mobile terminal 200 (NO in step S27), step S29 is skipped and a series of steps ends.

In biometric authentication sensor 300, first communication control unit 304 receives the request for setting off the flag (step S30). Flag processing unit 305 sets off flag 312 according to the received request (step S31). At the time, CPU 31 may set authentication information 311 (i.e., authentication ID 211) unreadable from the storage. For example, CPU 31 deletes (or discards) authentication information 311 (i.e., authentication ID 211) from the storage.

Thus, when it is determined that biometric authentication sensor 300 is separated from mobile terminal 200 during pairing (YES in step S27), flag 312 is switched from on to off (step S31). Accordingly, when biometric authentication sensor 300 communicates with apparatus 100 (see step S10 of Fig. 8), it is determined that flag 312 is set off ("OFF" in step S11), and the process for transmitting authentication ID 211 to apparatus 100 (step S14) is skipped and the user is prohibited from using (or operating) apparatus 100.

In contrast, while it is determined that biometric authentication sensor 300 is not separated from mobile terminal 200 during pairing (NO in step S27), step S29 is skipped and flag 312 remains set on. Accordingly, the process for transmitting authentication ID 211 to apparatus 100 (step S14) is performed and the user is permitted to use (or operate) apparatus 100.

### (False rejection rate and false acceptance rate)

In general, the above-described high precision authentication process requires a relatively long period of time, however, it provides an authentication success rate higher than a false authentication probability. For example, it provides a probability that the person of interest is not authenticated, or a false rejection rate, of 1/100 to 1/1,000, and a probability that another person is erroneously authenticated, or a false acceptance rate, of 1/100,000 to 1/10,000,000.

In contrast, in general, the above-described low precision authentication process requires a relatively short period of time, however, it provides a false authentication probability higher than an authentication success rate. For example, it provides a false rejection rate 1/10 to 1/100, and a false acceptance rate of 1/100 to 1/1,000.

In view of such a background, in the first embodiment, in a case where flag 312 is set on, that is, in a case where authentication is successfully done by the high precision authentication process and biometric authentication sensor 300 is not separated from mobile terminal 200, when the user can be authenticated by the low precision authentication process done by first authentication unit 302, the user can be permitted to operate apparatus 100.

As a result, in the case where once authentication has successfully been done by the high precision authentication process, when there is a high possibility that the user carries both biometric authentication sensor 300 and mobile terminal 200 with him/her (that is, when flag 312 is set on), user authentication can be done through the low precision authentication process done by first authentication unit 302 and a period of time required for authentication can be reduced.

### (Exemplary variation of setting off flag 312)

In the first embodiment, when biometric authentication sensor 300 is detected to be separated from mobile terminal 200, flag 312 of biometric authentication sensor 300 is switched from on to off, however, the condition for determining that the switching should be done is not limited to the distance between biometric authentication sensor 300 and mobile terminal 200.

For example, as a condition for determining that the flag is thus switched, after flag 312 is set on when a timer measures that a predetermined period of time (e.g., of about 3 minutes equivalent to a screen saver of a PC) has elapsed, flag processing unit 305 may switch flag 312 from on to off.

Alternatively, biometric authentication sensor 300 or mobile terminal 200 includes a position sensor. When it is determined from the position sensor's detected value that the user carrying biometric authentication sensor 300 or mobile terminal 200 with him/her has left a predetermined area (i.e., that positional information of biometric authentication sensor 300 or mobile terminal 200 is outside that area), flag processing unit 305 may switch flag 312 from on to off.

Alternatively, flag 312 may be switched from on to off based on a similarity of a fingerprint image output from first authentication unit 302. Specifically, when it is determined based on the similarity that a fingerprint image obtained via sensor 33 is different from a fingerprint image of a valid user, flag processing unit 305 may switch flag 312 from on to off.

The condition for determining whether to set off flag 312 may be a combination of two or more of the above plurality of conditions (i.e., distance, elapsed time, positional information, and similarity).

### (Exemplary variation of precision of authentication process)

While in the first embodiment, as a method for making authentication of first authentication unit 302 and that of second authentication unit 202 different from each other in precision, a method for making a matching process done by first authentication unit 302 and that done by second authentication unit 202 different in type is adopted, the method for making authentications different in precision is not limited thereto. For example, when first authentication unit 302 and second authentication unit 202 perform matching processes of the same type, a similarity threshold may be modified between first authentication unit 302 and second authentication unit 202 to provide authentications different in precision. Specifically, a similarity threshold value for second authentication unit 202 is made larger than a similarity threshold value for first authentication unit 302.

### [Exemplary variation of first embodiment]

An exemplary variation of the first embodiment will be described below. In the exemplary variation, in step S25 of FIG. 7, the process through which mobile terminal 200 transmits authentication ID 211 to biometric authentication sensor 300 can be omitted. In the exemplary variation, when first authentication unit 302 has successfully authenticated a user (YES in step S13), authentication ID 211 is transmitted from mobile terminal 200 to apparatus 100 (see step T7a in FIG. 10). Specifically, when first authentication unit 302 has successfully authenticated a user (YES in step S13), first authentication unit 302 transmits notification indicating that authentication has successfully been done to mobile terminal 200. Upon receiving the notification, CPU 20 of mobile terminal 200 transmits authentication ID 211 to apparatus 100 via second communication control unit 204.

### [Another exemplary variation of first embodiment]

Another exemplary variation of the first embodiment will be described below. In FIG. 7, flag update request unit 205 of mobile terminal 200 determines whether the condition for setting off flag 312 is satisfied (step S27). In the present exemplary variation, this determination is made by biometric authentication sensor 300 rather than mobile terminal 200. In that case, transmitting a request to set off flag 312 (step S29) can be omitted.

### [Second Embodiment]

A second embodiment is outlined as follows:

A portable authentication device includes a biometric information obtaining unit that obtains biometric information of a subject, a communication unit that performs wireless communication with an external device including a terminal device that the subject can carry with him/her, and a processor serving as a control unit. The processor performs an authentication process for confirming the subject's validity based on the obtained biometric information. That is, by the authentication process, it can be confirmed whether the subject is the person of interest. The authentication device modifies the authentication process in precision (hereinafter also referred to as "authentication precision") depending on whether the authentication device has established communication (or connection) with the terminal device. The authentication device determines whether the communication is established based on a strength (unit: dB) of a signal received from the terminal device.

Regarding power consumption and authentication precision, in general, the processor consumes large power when an authentication process with high authentication precision is performed, and the processor consumes small power when an authentication process with low authentication precision is performed. That is, the authentication device can maintain precision to validate a subject when the authentication process with high authentication precision is performed, whereas the authentication device can suppress power consumption when the authentication process with low authentication precision is performed. The authentication device according to the second embodiment modifies authentication precision based on a strength of a signal received from the terminal device.

An authentication system according to the second embodiment includes a biometric authentication sensor 300A, a mobile terminal 200A, and an apparatus 100A. The authentication system according to the second embodiment, biometric authentication sensor 300A, mobile terminal 200A and apparatus 100A are similar in configuration to authentication system 1, biometric authentication sensor 300, mobile terminal 200 and apparatus 100, respectively, of the first embodiment (see FIG. 1, FIG. 2, FIG. 3, and FIG. 4). Accordingly, the authentication system according to the second embodiment, biometric authentication sensor 300A, mobile terminal 200A and apparatus 100A will not be described redundantly in configuration.

### <Configuration of function of biometric authentication sensor 300A>

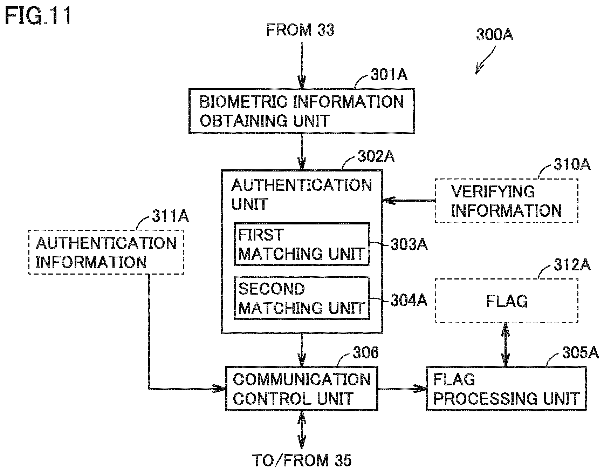

Fig. 5 shows an example in configuration of functions of biometric authentication sensor 300A. These functions are implemented by a program executed by CPU 30 or a combination of the program and a circuit. Herein, they will be described as a function of CPU 30 for simplifying the description. Herein, verifying information 310A, authentication information 311A, and a flag 312A are stored in a storage (ROM 31 or RAM 32). With reference to Fig. 11, CPU 30 includes a biometric information obtaining unit 301A which obtains a user's fingerprint image (biometric information) from an output of sensor 33, an authentication unit 302A which performs an authentication process based on information of the obtained fingerprint image, a communication control unit 306A for controlling communications done via communication interface 35, and a flag processing unit 305A to process flag 312A.

Authentication unit 302A includes a first matching unit 303A and a second matching unit 304A to match the information of the fingerprint image obtained via sensor 33 against verifying information 310 previously stored in ROM 31. First matching unit 303A performs an authentication process having a first precision. Second matching unit 304A performs an authentication process having a second precision which is an authentication precision higher than the first precision. Accordingly, the authentication process including a matching process of first matching unit 303A will also be referred to as a "low precision authentication process," and the authentication process including a matching process of second matching unit 304A will also be referred to as a "high precision authentication process."

Verifying information 310A includes information of a fingerprint image of a valid user of biometric authentication sensor 300A. From a result of the matching process done by first matching unit 303A or second matching unit 304A, authentication unit 302A calculates a similarity of the obtained fingerprint image and the fingerprint image of verifying information 310. When authentication unit 302A determines that the calculated similarity is equal to or greater than a threshold value, authentication unit 302A reads authentication information 311A from ROM 31 and transmits the read authentication information 311A to apparatus 100 via communication control unit 306. In contrast, when authentication unit 302A determines that the similarity is less than the threshold value, authentication unit 302A skips (or omits) a process for reading authentication information 311A from ROM 31. Accordingly, in that case, authentication information 311A is not transmitted to apparatus 100A.

Communication control unit 306A performs pairing with mobile terminal 200A via communication interface 35 and establishes connection (or communication). Communication control unit 306A thereafter maintains the connection. Communication control unit 306A during communication detects a strength (unit: dB) of a signal received from mobile terminal 200A and compares the detected signal strength with a threshold value. Communication control unit 306A outputs a flag update request based on a result of the comparison to flag processing unit 305A.

In response to the flag update request received from communication control unit 306A, flag processing unit 305A sets on or off flag 312A stored in RAM 32.

In the second embodiment, biometric authentication sensor 300A performs a matching process according to the feature point extraction method as an authentication process. In a fingerprint image, a fingerprint's end point or branch point is set as a feature point. The feature point is not limited to these. Furthermore, a feature point's attribute, and feature points' relative positional relationship are referred to as a feature value. Note that the feature value is not limited to these. Furthermore, verifying information 310A has feature values respectively corresponding to a plurality of feature points of a fingerprint image. First matching unit 303A performs a matching process using, for example, 50 feature points of a plurality of feature points of a fingerprint image. Second matching unit 304A performs a matching process using, for example, 100 feature points of the plurality of feature points of the fingerprint image. It should be noted that the number of feature points used in the matching process of first matching unit 303A is not limited to 50 and the number of feature points used in the matching process of second matching unit 304A is not limited to 100. It suffices that the number of feature points used in the matching process of second matching unit 304A is larger than the number of feature points used in the matching process of first matching unit 303A. Thus, by using different numbers of feature points (i.e., feature values) in the matching processes, respectively, a precision of an authentication process using the matching process of first matching unit 303A can be made different from a precision of an authentication process using the matching process of second matching unit 304A.

### <Flowchart of process>

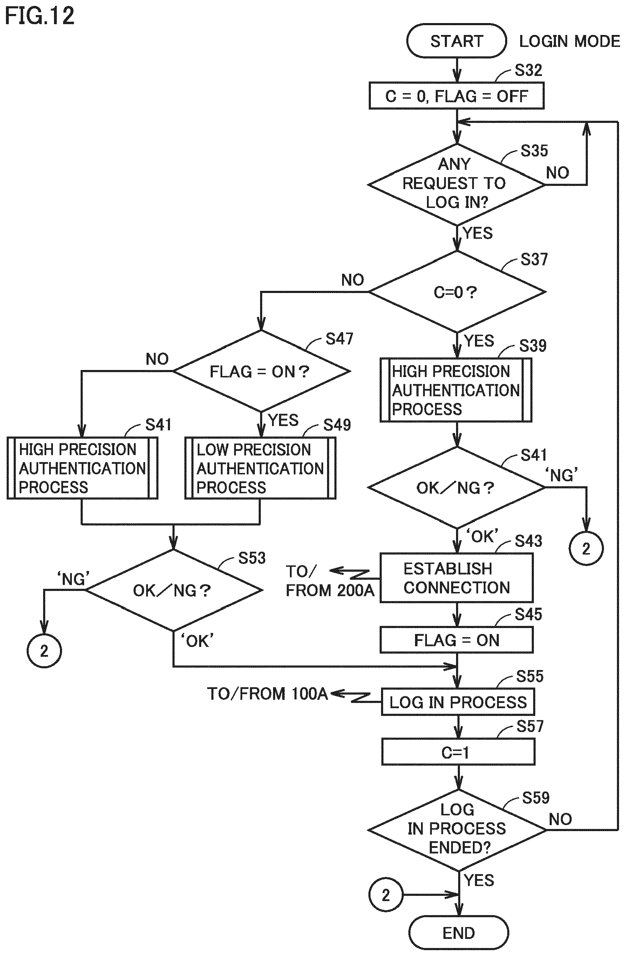

FIG. 12, FIG. 13, and FIG. 14 are flowcharts of an authentication process according to the second embodiment. Of these flowcharts, a process flow in biometric authentication sensor 300A is stored in ROM 31 as a program. CPU 30 reads the program from ROM 31 and executes it. Furthermore, of the flowcharts, a process flow in mobile terminal 200A is stored in ROM 21 as a program. CPU 20 reads the program from ROM 21 and executes it.

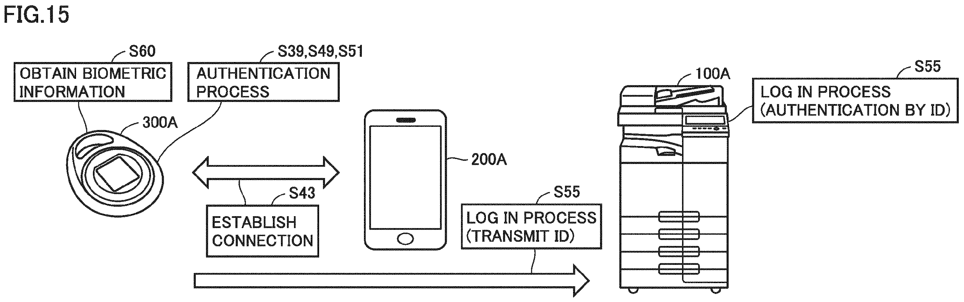

Fig. 15 schematically shows an authentication process or data flow in the authentication system according to the second embodiment. With reference to FIG. 15, the process will be outlined. Initially, biometric authentication sensor 300A obtains biometric information from a user while establishing a connection with mobile terminal 200A (step S60 described later), and uses the obtained biometric information to perform an authentication process having a precision according to a value of flag 312A (steps S39, S49, and S51 described later). When the user's validity is confirmed by the authentication process, biometric authentication sensor 300A performs a process to log in to apparatus 100A (step S55 described later).

With reference to Figs. 12-14, the authentication process according to the second embodiment will more specifically be described.

### (Process for setting flag 312A)

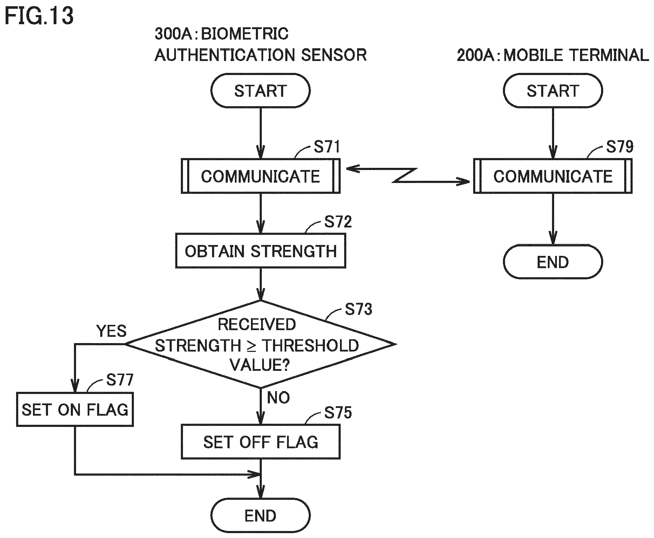

In the second embodiment, a value of flag 312A indicates whether biometric authentication sensor 300A is located near mobile terminal 200A. A process for setting a value of flag 312A will be described with reference to FIG 13. Here, mobile terminal 200A is powered on and thus in a state in which it can communicate with biometric authentication sensor 300A. Referring to FIG. 13, CPU 30 of biometric authentication sensor 300A, in a login mode, performs pairing with mobile terminal 200A and establishes communicative connection. During communication with connection established with mobile terminal 200A in this way, CPU 30 repeats performing the process of FIG. 13.

Initially, during communication (step S71, step S79), communication control unit 306A of biometric authentication sensor 300A detects a strength of a signal received from mobile terminal 200A (step S72), and determines whether the detected strength is equal to or greater than a threshold value (Step S73). When communication control unit 306A determines that the received strength is equal to or greater than the threshold value (YES in step S73), communication control unit 306A outputs an update request for setting on flag 312A to flag processing unit 305A, and flag processing unit 305A and sets on flag 312A according to the update request (step S77). Thereafter, the process ends.

In contrast, when communication control unit 306A determines that the detected strength is less than the threshold value (NO in step S73), communication control unit 306A outputs an update request for setting off flag 312A to flag processing unit 305A, and flag processing unit 305A and sets off flag 312A according to the update request (step S75). Thereafter, the process ends.

Thus, during communication with connection established, a value of flag 312A set based on a strength of a signal received from mobile terminal 200A indicates whether biometric authentication sensor 300A is located near mobile terminal 200. That is, when flag 312A indicates "off", that is, when the received signal's strength is less than the threshold value, biometric authentication sensor 300A is located away from mobile terminal 200A. When flag 312A indicates "on", that is, when the received signal's strength is equal to or larger than the threshold value, biometric authentication sensor 300A is located near mobile terminal 200A.

### (Authentication process)

With reference to FIG. 12, an authentication process performed by biometric authentication sensor 300 will be described. While this authentication process is performed, the process of FIG. 13 is also performed. CPU 30 of biometric authentication sensor 300A starts the process when CPU 30 determines that an instruction has been received to start the login mode based on an operation received from a user via button 34. During the login mode, biometric authentication sensor 300A can receive a request from the user for logging in to apparatus 100A.

When the process is started, CPU 30 initially sets a variable C to 0 and initializes flag 312A to be off (step S32). The value of variable C is referenced to determine whether a login request, which will be described later, is an input for a first time (that is, C = 0) or an input for a second or subsequent time (that is, C = 1) in the login mode.

CPU 30 determines whether a login request has been received based on a user operation received via button 34 (step S35). While CPU 30 does not determine that the login request has been received (NO in step S35), CPU 30 repeats step S35. When CPU 30 determines that the login request has been received (YES in step S35), CPU 30 determines whether variable C is 0 (step S37). When it is determined that variable C is 0 (YES in step S37), authentication unit 302A performs a high precision authentication process using second matching unit 304A (step S39). CPU 30 determines whether the similarity described above that is indicated by a result of the high precision authentication process is equal to or greater than a threshold value, and, based on this determination, CPU 30 determines whether the authentication has successfully been done (OK) or has failed (NG) (step S11). When CPU 30 determines that the authentication has failed ('NG' in step S41), CPU 30 ends the process.

When CPU 30 determines that the authentication has successfully been done (OK) ("OK" in step S41), communication control unit 306A performs pairing with mobile terminal 200A and establishes connection with mobile terminal 200A (step S43). When communication control unit 306A establishes communication with mobile terminal 200A, communication control unit 306A outputs an update request for setting on flag 312A to flag processing unit 305A. Flag processing unit 305A sets on flag 312A according to the update request (step S45). Here, when connection is established, a process for setting flag 312A shown in FIG. 12 is started.

CPU 30 performs a login process (step S55). In the login process, communication control unit 306A reads authentication information 311A from ROM 31, and transmits the read authentication information 311A to apparatus 100A. CPU 150 of apparatus 100A performs an authentication process to match authentication information 311A received from biometric authentication sensor 300A via communication interface 157 against registered ID 161 of storage 160. Based on a result of the matching, CPU 150 accepts a login request from the user. Thus, the user is permitted to log in.

After the login process, CPU 30 sets variable C to 1 (step S57). Thereafter, CPU 30 determines whether a user operation indicating an instruction to end the login mode has been received via button 34 (step S59). When the operation of the instruction to end the login mode has been received (YES in step S59), CPU 30 ends a series of steps. In contrast, when the operation of the instruction to end the login mode is not received (NO in step S59), the process returns to step S35.

In step S37, when CPU 30 determines that variable C is not 0 (that is, C = 1) (NO in step S37), CPU 30 determines whether flag 312A is set on (step S47). When flag 312A is set on (YES in step S47), authentication unit 302A performs the low precision authentication process using first matching unit 303A (step S49). In contrast, when flag 312A is set off (NO in step S47), authentication unit 302A performs the high precision authentication process using second matching unit 304A (step S51).

CPU 30 determines whether the similarity described above that is indicated by a result of the low precision authentication process (step S49) or the high precision authentication process (step S51) is equal to or greater than a threshold value. Based on a result of this determination, CPU 30 determines whether the authentication has successfully been done (OK) or failed (NG) (step S53). When CPU 30 determines that the authentication has failed ('NG' in step S53), CPU 30 ends the process.

When CPU 30 determines that the authentication has successfully been done (OK) ("OK" in step S53), the above-described login process is performed (step S55).

According to the process of FIG. 12, when CPU 30 accepts a login request in the login mode for a first time (YES in step S35), CPU 30 performs a high precision authentication process (step S39). When the high precision authentication process provides a result of 'OK (authentication successful)' ("OK" in step S41), biometric authentication sensor 300A establishes connection with mobile terminal 200 carried by the user himself/herself (step S43) and sets on flag 312A (step S45). Thereafter, CPU 30 transmits to apparatus 100A information (authentication information 311A) necessary for using apparatus 100A and performs the login process (step S55).

In the login mode, in a case where a login request is subsequently received (YES in step S35, NO in step S37), while biometric authentication sensor 300A is located near mobile terminal 200A (connection is established and flag 312A is set on) (YES in step S47), biometric authentication sensor 300A detects biometric information and performs a low precision authentication process using the measured biometric information (step S49). When the low precision authentication process indicates a result indicating that the authentication has successfully been done ("OK" in step S53), CPU 30 performs the login process (step S55).

In contrast, when biometric authentication sensor 300A is not located near mobile terminal 200A (when flag 312A is set off even when connection is established) (NO in step S47), biometric authentication sensor 300A measures biometric information and performs the high precision authentication process using the measured biometric information (step S51). When the high precision authentication process indicates a result indicating that the authentication has successfully been done ("OK" in step S53), CPU 30 performs the login process (step S55). Thus a precision of an authentication process to be performed can be automatically switched based on a value (OFF/ON) of flag 312A, that is, whether biometric authentication sensor 300A is away from mobile terminal 200A. Thus, when an authentication process is switched in precision, the user does not need to change his/her operation's contents, and excellent operability is thus achieved.

### (Login process in apparatus 100A)

In the above step S55, apparatus 100A receives authentication information 311A from biometric authentication sensor 300A via reception interface 159. User authentication unit 175A matches the received authentication information 311A against registered ID 161 in storage 160, and when a result of the matching indicates a match, CPU 150 starts each unit. Thus, when it is determined that the user is a valid user (a user registered with apparatus 100A), apparatus 100A permits the user to use (or operate) apparatus 100A.

On the other hand, when the result of the matching by user authentication unit 175A does not indicate a match, CPU 150 does not start each unit. Thus, when it is determined that the user is not a valid user of apparatus 100A, apparatus 100A prohibits the user from using (or operating) apparatus 100A.

### (Authentication process)

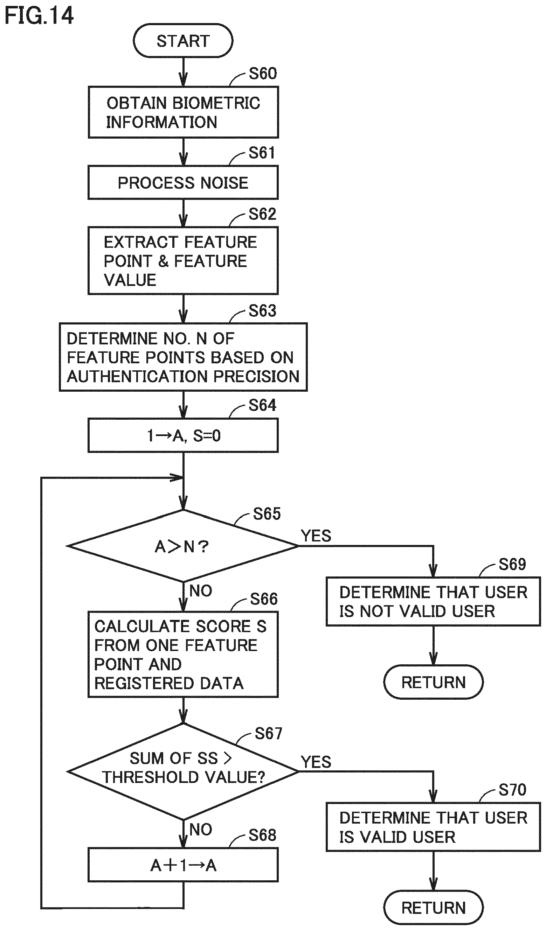

Fig. 14 is a flowchart of an authentication process according to the second embodiment. Referring to FIG. 14, biometric information obtaining unit 301A obtains a fingerprint image as biometric information (step S60). Authentication unit 302A performs a process for removing noise from the fingerprint image (step S61). Authentication unit 302A identifies a plurality of feature points from the fingerprint image having noise removed therefrom, and extracts a feature value for each feature point (step S62).

Authentication unit 302A determines a number "N" of feature points to be used in a matching process based on an authentication precision (step S63). For example, when the high precision authentication process is performed (steps S39 and S51), number N of feature points is 100, whereas when the low precision authentication process is performed (step S49), number N of feature points is 50.

Authentication unit 302A sets a variable "A" to 1 for counting the number of feature points and sets a score "S", which will be described later, to 0 (step S64).

Authentication unit 302A determines whether a condition of A > N is satisfied (step S65). At this point in time, A = 1, and accordingly, authentication unit 302A determines that the condition of A > N is not satisfied (NO in step S65).

Authentication unit 302A matches a feature value of a first feature point against a feature value corresponding to that feature point of verifying information 310A and calculates score S by a predetermined operation based on a result of the matching (step S66). Score S indicates a similarity between the feature values.

Authentication unit 302A calculates score S for each feature point, and sums up such calculated scores "S"s. Authentication unit 302A determines whether a condition of (sum of Ss > threshold) is satisfied (step S67). When the condition of (sum of Ss > threshold) is not satisfied (NO in step S67), authentication unit 302A counts up the value of variable A by 1 (step S68). Thereafter, the control returns to step S65.

In step S65, when authentication unit 302A determines that the condition of A > N is satisfied (YES in step S65), authentication unit 302A determines that the obtained biometric information (or fingerprint image) does not match verifying information 310A of the user (a valid user) (step S69). Base on this determination, authentication unit 302A outputs "authentication failed" ('NG'), and ends the process.

In step S67, when authentication unit 302A determines that the condition of (sum of Ss > threshold) is satisfied (YES in step S67), authentication unit 302A determines that the obtained biometric information (or fingerprint image) matches verifying information 310A of the user (a valid user) (step S70). Base on this determination, authentication unit 302A outputs "authentication successful" ('OK'), and ends the process.

In the process of FIG. 14, biometric authentication sensor 300A matches feature values of each feature point between the obtained fingerprint image and verifying information 310A, and calculates score S (similarity) based on a result of the matching. Biometric authentication sensor 300A calculates a cumulative value of scores Ss of feature points, and determines the validity of the user of the obtained fingerprint image, based on whether the cumulative value exceeds a threshold value. In the second embodiment, the high precision authentication process has a larger number of feature points to be matched (N = 100) than the low precision authentication process does (N = 50), and the validity of the user can be determined more precisely.

While in the second embodiment, as a case where flag 312A in biometric authentication sensor 300A is set off, a case when a received signal's strength is decreased, i.e., when mobile terminal 200A is away from biometric authentication sensor 300A is indicated, it is not limited as such. For example, biometric authentication sensor 300A may set off flag 312A once a fixed period of time has elapsed since the high precision authentication process was performed. Alternatively, when the user of biometric authentication sensor 300A leaves a room in which apparatus 100A is installed, biometric authentication sensor 300A may set off flag 312A. Alternatively, authentication unit 302A may compare biometric information (a fingerprint image) obtained by biometric information obtaining unit 301A with the immediately previously obtained biometric information (or fingerprint image), and when authentication unit 302A determines, based on a result of the comparison, that they are different biometric information (or fingerprint images), biometric authentication sensor 300A may set off flag 312A. Alternatively, biometric authentication sensor 300A may set off flag 312A according to a condition of a combination of two or more of these.

### [Exemplary variation of second embodiment]

An exemplary variation of the second embodiment will be described below. While in the second embodiment, an authentication precision is modified based on a value of flag 312A, the authentication precision may be modified in a different method. In the exemplary variation, for example, the precision is variably determined based on a value of flag 312A and a type of apparatus 100A which a user requests logging in to. Accordingly, even when flag 312A is set on, a high precision authentication process is always performed depending on the type of apparatus 100A.

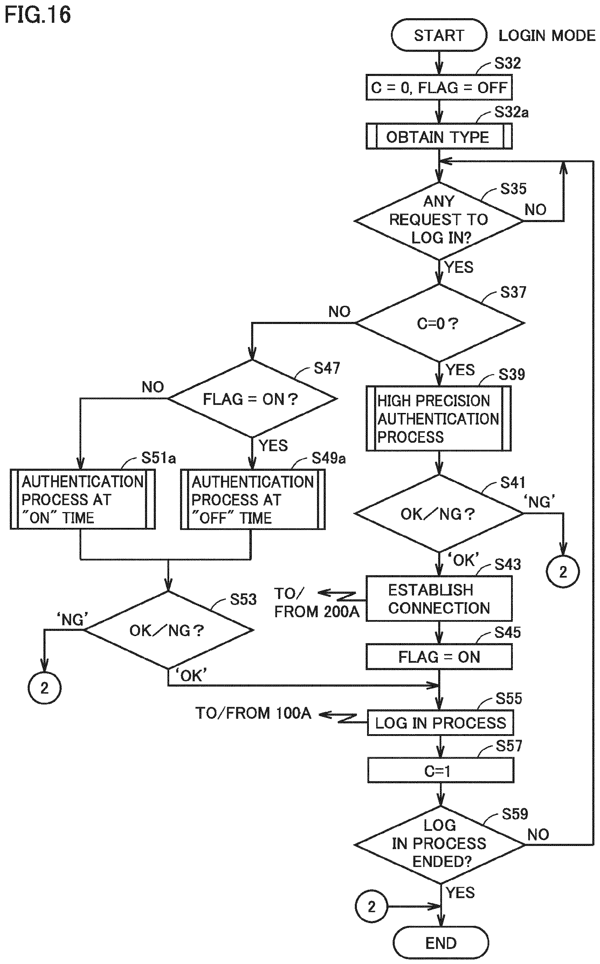

FIG. 16 is a flowchart of a process according to the exemplary variation of the second embodiment. In FIG. 16, step S49 and step S51 of FIG. 12 are replaced with step S49a and step S51a, respectively. In addition, in FIG. 16, step S32a is added. The other steps in FIG. 16 are the same as those in FIG. 12. Accordingly, in the process of FIG. 16, step S32a, step S49a and step S51a will mainly be described, and the other steps will not be detailed redundantly.

Referring to FIG. 16, in step S32a, authentication unit 302A obtains the type of apparatus 100A (step S32a). This will be detailed hereinafter. In step S49a, authentication unit 302A determines an authentication precision based on a value of flag 312A ('off') and the type of apparatus 100A and performs an authentication process according to the determined precision (step S49a). Similarly, in step S51a, authentication unit 302A determines an authentication precision based on a value of flag 312A ('on') and the type of apparatus 100A and performs an authentication process according to the determined precision (step S51a). Authentication precision is determined in a method, as will be described later.

### (Process for obtaining type of apparatus 100A)

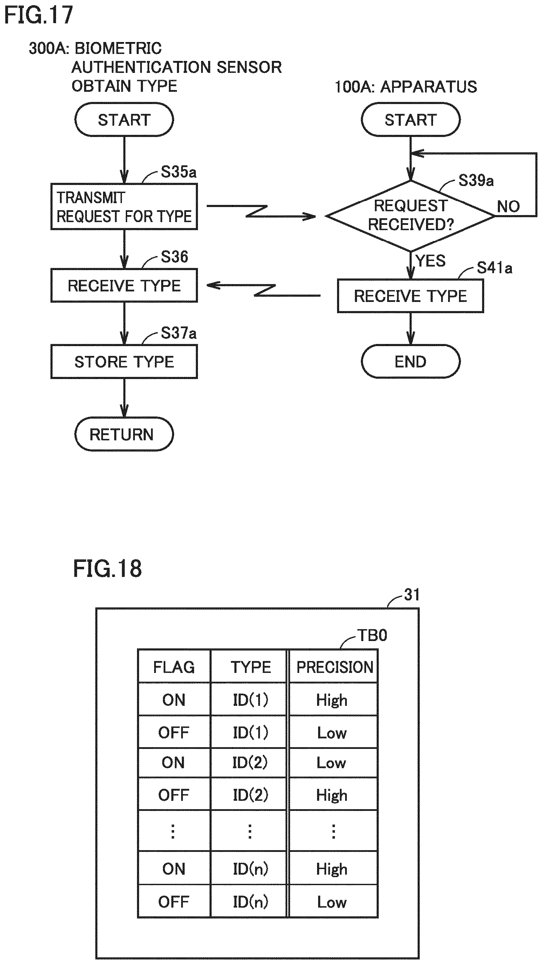

Fig. 17 is a flowchart of step S32a of FIG. 16. Of the flowchart, a process flow in biometric authentication sensor 300A is stored in ROM 31 as a program. CPU 30 reads the program from ROM 31 and executes it. Furthermore, of the flowchart, a process flow in apparatus 100A is stored in storage 160 as a program. CPU 150 reads the program from storage 160 and executes it.

Referring to FIG. 17, in order to obtain the type of apparatus 100A, authentication unit 302A transmits a request for the type to apparatus 100A (step S35a). CPU 150 of apparatus 100A determines whether the request is received from biometric authentication sensor 300A (step S39a). When the request is not received (NO in step S39a), step S39a is repeated.

When the request is received (YES in step S39a), CPU 150 reads the type of apparatus 100A stored in a predetermined storage area and transmits it to the requester, or biometric authentication sensor 300 (step S41a).

Authentication unit 302A of biometric authentication sensor 300A receives the type from apparatus 100A (step S36), and stores the received type to a storage such as RAM 32 (step S37a). Subsequently, the control proceeds to step S35a as described above.

### (Determining authentication precision, and authentication process)

A method of determining an authentication precision in steps S49a and S51a of FIG. 16 will be described. In order to determine an authentication precision, CPU 30 retrieves a table TB0 stored in ROM 31. FIG. 18 shows an example of contents of table TB0 according to the second embodiment. In table TB0, combinations each consisting of a value ('on' or 'off') of flag 312 and a type (types ID(1), ID(2), ..., ID(i), ..., ID(n)) of apparatus 100A, and an authentication precision (High or Low) corresponding to each combination, are stored. In table TB0, "High" indicates a high precision authentication process, and "Low" indicates a low precision authentication process. Authentication unit 302A retrieves table TB0 based on a combination of a value of flag 312A determined in step S47 and a type of apparatus 100A obtained in step S32a and, based on a result of the retrieval, reads from table TB0 an authentication precision corresponding to that combination. Thus a precision of an authentication process to be performed is determined. In steps S49a and S51a, authentication unit 302A performs the authentication process according to the determined precision.

While in the second embodiment, table TB0 is provided in biometric authentication sensor 300A, it may be provided in apparatus 100A. In that case, apparatus 100A stores table TB0 in storage 160. In that case, biometric authentication sensor 300A transmits a value of flag 312A to apparatus 100A. Apparatus 100A retrieves table TB0 of storage 160 based on a combination of the value of flag 312A received from biometric authentication sensor 300A and the type of apparatus 100A and reads a corresponding authentication precision from table TB0. Then, apparatus 100A transmits the read authentication precision to the requester or biometric authentication sensor 300A.

### (Another Example of Precision Determination Method)

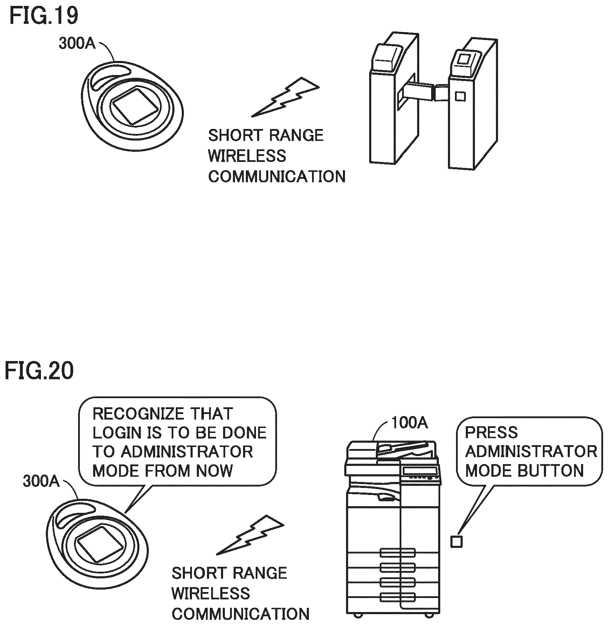

FIG. 19, FIG. 20, and FIG. 21 schematically show a manner of embodying an authentication process according to the second embodiment. In this example, when flag 312A is set on, a high precision authentication process is performed depending on a type of apparatus 100A or a type of a function of apparatus 100A.

For example, in a case where flag 312A is in the 'on' state, when the type of apparatus 100A indicates "a gate for entering a site," low precision is determined, whereas when the type indicates "a gate for entering a security area," a high precision is determined (see FIG. 19).

A precision of an authentication process is not limited to the type of apparatus 100A, and may be determined based on a type of a function of apparatus 100A. For example, in a case where flag 312A is in the 'on' state, when the user uses a secure printing function of apparatus 100A, a high precision is determined, whereas for a normal printing function, a low precision is determined.

A precision of an authentication process is not limited to a type of apparatus 100A or a type of a function thereof, and may be determined based on a mode of operation of apparatus 100A and an attribute of a user. For example, in a case where flag 312A is in the 'on' state, when apparatus 100A is a server or MFP and apparatus 100A is in an administrator login mode, for a case where the user's attribute indicates "normal" a low precision may be determined, whereas for a case where the user's attribute indicates "administrator" a high precision may be determined (see FIG. 20).

Further, a precision of an authentication process, even in a case where flag 312A is set on, may be varied with the position of biometric authentication sensor 300A. For example, biometric authentication sensor 300A incorporates a position sensor. When biometric authentication sensor 300A determines based on the position sensor's output that biometric authentication sensor 300A is located within a predetermined area, for example while biometric authentication sensor 300A determines that it is located within a security area, a highly precision authentication may constantly be performed.

### (Still Another Example of Precision Determination Method)

In still another example, when flag 312A is set off, a low precision authentication process is performed based on a type of apparatus 100A or a type of a function of apparatus 100A. For example, when a high precision authentication process is performed and flag 312A is set on, and thereafter flag 312A is set off, a low precision authentication process, rather than a high precision authentication process, is performed under some condition.

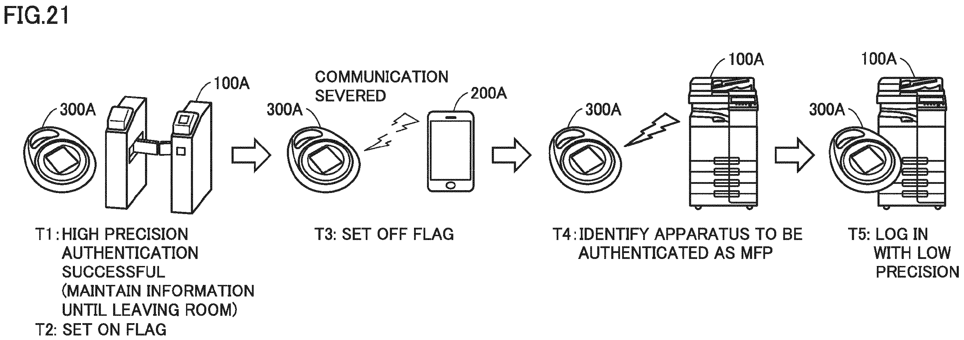

Referring to FIG. 21, a case where a user carrying biometric authentication sensor 300A with him/her enters a room and thereafter uses apparatus 100A (a MFP or PC) installed in that room or a case where the user uses a function of apparatus 100A (an MFP) will be described.

In FIG. 21, authentication unit 302A performs a high precision authentication process based on a model of apparatus 100A (i.e., a gate) when the user enters the room (step T1). Until the user leaves the room, information indicating the validity of the user is held at the gate. At the time, flag 312A is set on (step T2). Thereafter, communication between biometric authentication sensor 300A and mobile terminal 200A is stopped, and flag 312A is set off (step T3).

In the case where flag 312A is set off, when the type of apparatus 100A indicates "MFP," a low precision authentication process is performed based on the type of apparatus 100A. A login process (step S55) is performed between biometric authentication sensor 300A and apparatus 100A (steps T4, T5).

### [Exemplary variation of second embodiment]

In this exemplary variation, in order to use three or more authentication precisions, tables TB1 and TB2 are retrieved.

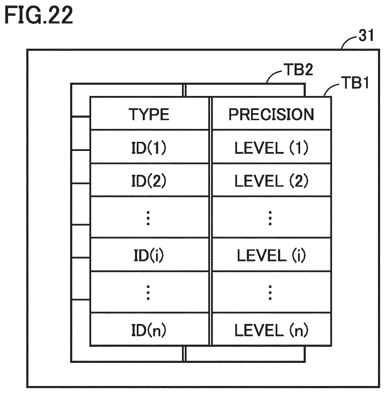

Fig. 22 shows an example of contents of tables TB1 and TB2. Tables TB1 and TB2 are stored in ROM 31 and retrieved by authentication unit 302A. Authentication unit 302A retrieves table TB1 when flag 312A is set on, and authentication unit 302A retrieves table TB2 when flag 312A is set off. Tables TB1 and TB2 have similar configurations, and accordingly, table TB1 will representatively be described. In table TB1, in association with types of apparatus 100A (ID(1), ID(2), ..., ID(i), ..., ID(n)), authentication precisions (three or more authentication precisions of a precision (AC1), a precision (AC2), a precision (AC3), a precision (AC4), a precision (AC5), ..., a precision (ACi), ..., a precision (ACn)) are registered, respectively. Note that regarding levels of authentication precisions, there is a relationship of precision (AC1) > precision (AC2) >, ..., precision (AC5), ..., > precision (ACi) >, ..., > precision (ACn). Accordingly, authentication unit 302A can determine one of three or more authentication precisions by retrieving table TB1 or TB2 according to the value of flag 312A, based on the type of apparatus 100A.

Specifically, a high precision authentication process is performed and thereafter when flag 312A is set on, then in a subsequent authentication process, authentication unit 302A retrieves table TB1. By this retrieving, an authentication precision can be changed depending on the type of apparatus 100A. Specifically, for example, when the type of apparatus 100A indicates a "gate for entering a site," an authentication process's precision is determined to be a precision (for example, AC1), and whereas when the type of apparatus 100A indicates a "gate for entering a room," the authentication process's precision is determined to be a precision (for example, AC2).

Further, a precision of an authentication process may be changed based on a period of time having elapsed since a high precision authentication process or a login process was last performed. For example, when flag 312A is set on and it is determined that a period of time having elapsed since a high precision authentication process was last performed is within a predetermined period of time, authentication unit 302A determines a precision lower than that of the immediately previous authentication process. Furthermore, when flag 312A is set on and it is determined that a period of time having elapsed since a process for logging in to apparatus 100A (step S55) was immediately previously performed is within a predetermined period of time, authentication unit 302A determines a precision lower than that of the immediately previous authentication process.

Specifically, for example, authentication unit 302A determines that a precision of an authentication process is set to a lower precision (e.g., AC4) when the precision of the authentication process is determined based on the type of apparatus 100A (MFP) within a predetermined period of time (for example of 3 minutes) after a high precision authentication process according to a precision determined by the type of apparatus 100 (a gate for entering a room) is performed. Furthermore, authentication unit 302A may determine that a precision of an authentication process is set to a lower precision (e.g., AC5) when apparatus 100A is again logged in to when a period of time having elapsed since apparatus 100A was logged out is within a predetermined period of time (for example of 1 minute).

### [Further exemplary variation of second embodiment]

While in the second embodiment, authentication precision is classified by the number of feature points to be matched, the method for classifying an authentication precision is not limited to the number of feature points.

In this exemplary variation, for example, an authentication precision is varied by varying a type of a process for matching biometric information. Specifically, the frequency analysis method may be used for a high precision authentication process, whereas the feature point extraction method may be used for a low precision authentication process. Alternatively, a hybrid authentication using a combination of the frequency analysis method and the minutiae method may be used for a high precision authentication process, whereas the feature point extraction method may be used a for low precision authentication process.

As another method for varying an authentication precision, for example, a threshold for determination (see step S67) may be changed. Specifically, while an authentication process is performed such that the number of feature points to be matched is fixed, authentication unit 302A may set a threshold value for determination (see step S67) to a large value when the authentication process is a high precision authentication process, whereas authentication unit 302A may set the threshold value for determination to a small value when the authentication process is a low precision authentication process.

According to the second embodiment, authentication unit 302A performs one of a high precision authentication process and a low precision authentication process at least based on a value of flag 312A. Thus, a case of performing only the high precision authentication process (or frequently performing the high precision authentication process) can be avoided, and thereby, an issue of large power consumption of the operation processing unit (authentication unit 302A) can be addressed. Further, according to the second embodiment, a case of performing only the low precision authentication process (or frequently performing the low precision authentication process) can also be avoided, and thereby, an issue of failing to obtain high authentication precision can be addressed.

An authentication system according to the second embodiment includes a portable authentication device and a terminal device that can be carried by a subject. The authentication device includes a biometric information obtaining unit which obtains biometric information of the subject, a communication unit which wirelessly communicates with the terminal device, and a control unit. The control unit is configured to perform an authentication process based on the obtained biometric information and make the authentication process different in precision based on a strength of a signal received from the terminal device.

### [Third Embodiment]

In a third embodiment, a program is provided for causing mobile terminal 200 (200A) or biometric authentication sensor 300 (300A) to perform the authentication process of each of the above-described embodiments. Such a program at least includes a program according to the flowcharts shown in FIGS. 7-9, 12-14, 16 and 17. The program can be stored on a flexible disk, a CD-ROM (Compact Disk-Read Only Memory), a ROM, a RAM, a memory card or a similar, computer readable storage medium that is an accessory of a computer of mobile terminal 200 (200A) or biometric authentication sensor 300 (300A), and thus provided as a program product. Alternatively, it can also be stored in a storage medium such as a hard disk incorporated in a computer, and thus provided. Furthermore, the program can also be provided by downloading via a network. The program is executed by one or more processors such as CPU 20 or CPU 30, or by a combination of the processor(s) and a circuit (ASIC, FPGA, etc.). The ASIC is an integrated circuit (IC) customized to perform all or a part of the functions of the elements shown in Figs. 5, 6 and 11. The FPGA is an integrated circuit designed to be configured after manufacturing in order to perform all or a part of the functions of the elements shown in Figs. 5, 6 and 11. Note that the type of the circuit is not limited to these.

Note that the program may invoke a required module of program modules provided as a portion of an operating system (OS) of a computer, in a prescribed sequence, as timed as prescribed, and may cause the module to perform a process. In that case, the program per se does not include the above module and cooperates with the OS to perform the process. Such a program that does not include the module can also be included in the program according to the third embodiment.

Furthermore, the program according to the third embodiment may be incorporated in and provided as a portion of another program. The program in that case also per se does not include the module(s) included in the other program and cooperates with the other program to perform a process. Such a program incorporated in another program can also be included in the program according to the third embodiment.

The provided program product is installed in a program storing unit, such as a hard disk, and executed. Note that the program product includes a program per se and a storage medium having the program non-transiently stored thereon.

While the present invention has been described in embodiments, it should be understood that the embodiments disclosed herein are illustrative and non-restrictive in any respect. The scope of the present invention is defined by the terms of the claims, and is intended to include any modifications within the meaning and scope equivalent to the terms of the claims.

## Claims

1. A portable authentication device (300), comprising:
a biometric information obtaining unit (301) which obtains biometric information of a subject;
a communication unit (35) which communicates with another authentication device (200);
an authentication unit (302) which performs a first authentication process with the biometric information obtained by the biometric information obtaining unit; and
a control unit,
the communication unit transmitting the obtained biometric information to the other authentication device to cause the other authentication device to perform a second authentication process using the obtained biometric information,
the control unit, when the subject is authenticated by the second authentication process of the other authentication device as being valid and thereafter while a predetermined condition is satisfied, transmitting information to an apparatus to be controlled (100) for causing the apparatus to authenticate the subject when the subject is authenticated by the first authentication process as being valid.

2. A portable authentication device (200), comprising:
a communication unit (27) which communicates with another authentication device (300) comprising a biometric information obtaining unit (301) which obtains biometric information of a subject, the other authentication device performing a first authentication process (303) with the biometric information obtained;
an authentication unit (202) which performs a second authentication process (203) with the biometric information received from the other authentication device; and
a control unit (20),
the control unit, when the subject is authenticated by the second authentication process as being valid and thereafter while a predetermined condition is satisfied, transmitting to an apparatus (100) to be controlled information for causing the apparatus to authenticate the subject when the subject is authenticated by the first authentication process as being valid.

3. The authentication device according to claim 1 or 2, wherein the first authentication process is different in precision from the second authentication process.

4. The authentication device according to any one of claims 1 to 3, wherein the second authentication process is higher in precision than the first authentication process.

5. The authentication device according to any one of claims 1 to 4, wherein the predetermined condition includes at least one of:
a condition based on a strength of a signal received by the authentication device from the other authentication device;
a condition based on a period of time having elapsed since the subject was authenticated by the second authentication process as being valid; and
a condition based on a position of the authentication device.

6. The authentication device according to any one of claims 1 to 5, further comprising a storage unit that stores information for causing the apparatus to authenticate the subject, wherein the authentication device prohibits reading the information from the storage unit when the subject is authenticated by the second authentication process as being valid and a predetermined condition is unsatisfied.

7. An authentication system comprising the authentication device and the other authentication device according to any one of claims 1 to 6.

8. An authentication method using a portable authentication device (300), comprising:
obtaining a subject's biometric information (S3);
communicating with another authentication device (S1);
performing a first authentication process with the biometric information obtained (S12), the communicating including transmitting the obtained biometric information to the other authentication device to cause the other authentication device to perform a second authentication process with the obtained biometric information (S5); and
while the subject is authenticated as being valid by the second authentication process of the other authentication device and a predetermined condition is satisfied, transmitting information to an apparatus to be controlled for causing the apparatus to authenticate the subject when the subject is authenticated by the first authentication process as being valid.

9. An authentication method using a portable authentication device (200), comprising:
communicating with another authentication device (300) comprising a biometric information obtaining unit (301) which obtains biometric information of a subject, the other authentication device performing a first authentication process (303) with the biometric information obtained;
performing a second authentication process (203)with the biometric information received from the other authentication device (S17); and
while the subject is authenticated by the second authentication process as being valid and a predetermined condition is satisfied, transmitting to an apparatus to be controlled information for causing the apparatus to authenticate the subject when the subject is authenticated by the first authentication process as being valid (T7a).

10. A program for causing a processor to perform the authentication method according to claim 8 or 9.

11. A portable authentication device (300A) comprising:
a biometric information obtaining unit (301A) which obtains biometric information of a subject;
a communication unit (35) which wirelessly communicates with a terminal device (200A) which can be carried by the subject; and
a control unit,
the control unit being configured to perform an authentication process based on the biometric information obtained and make the authentication process different in precision based on a strength of a signal received from the terminal device.

12. The authentication device according to claim 11, wherein the control unit performs an authentication process having a first precision when the strength of the signal received from the terminal device is equal to or greater than a threshold value, and the control unit performs an authentication process having a second precision higher than the first precision when the strength is less than the threshold value.

13. The authentication device according to claim 11 or 12, wherein the control unit is further configured to make the authentication process different in precision based on a period of time having elapsed since the authentication process of was recently performed, and the strength of the signal received from the terminal device.

14. The authentication device according to any one of claims 11 to 13, wherein the control unit is further configured to make the authentication process different in precision based on a position of the authentication device and the strength of the signal received from the terminal device.

15. The authentication device according to any one of claims 11 to 14, wherein:
the communication unit further performs wireless communication with a target apparatus (100A) which can be to be operated by the subject; and
the control unit is further configured to cause the communication unit to transmit authentication information to the target apparatus for authenticating the subject when the subject is authenticated by the authentication process as being valid.

16. The authentication device according to claim 15, wherein the control unit is further configured to make the authentication process different in precision based on a type of the target apparatus and the strength of the signal received from the terminal device.

17. The authentication device according to claim 16, wherein the control unit is further configured to make the authentication process different in precision based on a type of a function of the target apparatus and the strength of the signal received from the terminal device.

18. The authentication device according to any one of claims 15 to 17, wherein a communication system between the authentication device and the terminal device is different from a communication system between the authentication device and the target apparatus.

19. An authentication method comprising:
obtaining a subject's biometric information (S60);
wirelessly communicating with a terminal device which can be carried by the subject; and
performing, using the biometric information, an authentication process different in precision based on a strength of a signal received from the terminal device (S63 to S68).

20. A program for causing a processor to perform the authentication method according to claim 19.

21. A system comprising:
the portable authentication device according to any one of claims 11 to 18; and
a terminal device wirelessly connected to the portable authentication device.
